# EUROPEAN PATENT APPLICATION

(11) **EP 3 461 670 A1**
(43) Date of publication of application: **03.04.2019**
(21) Application number: 17815497.7
(22) Date of filing: 22.06.2017
(51) Int. Cl.: B60K 15/04, F02M 37/00, F16L 9/02

(54) **STRUCTURE FOR INSTALLING TUBULAR MEMBER TO BE CONNECTED TO FUEL TANK ON VEHICLE, AND PIPING STRUCTURE**

(30) Priority: 24.06.2016 JP 2016126073; 13.10.2016 JP 2016202139
(71) Applicant: Unipres Corporation, Yokohama-shi Kanagawa 222-8581 (JP)
(72) Inventor: SAITO, Yoshinori, Yokohama-shi Kanagawa 222-0033 (JP); TAKAMATSU, Osamu, Yokohama-shi Kanagawa 222-0033 (JP); YAMAMOTO, Toshitaka, Yokohama-shi Kanagawa 222-0033 (JP); SUZUKI, Nobuhide, Yokohama-shi Kanagawa 222-0033 (JP); ANDOH, Akinori, Yokohama-shi Kanagawa 222-0033 (JP); KAWAKAMI, Koshiro, Yokohama-shi Kanagawa 222-0033 (JP)
(74) Representative: Kilian Kilian & Partner
(86) International application number: PCT/JP2017/023109
(87) International publication number: WO 2017/222031

(57) **Abstract**

A tubular member to be connected to a fuel tank can inhibit crevice corrosion to surely prevent pitting corrosion from occurring and contribute to weight and cost reductions of automobiles even if a ferritic stainless steel material which is advantageous in terms of material cost is used for the tubular member and a bracket. An installing structure for the tubular member may include a bracket to be provided on a circumferential surface of the tubular member. The tubular member may be formed of a ferritic stainless steel material. The bracket may be formed of the ferritic stainless steel material having a surface on which an aluminum plated layer is formed. The aluminum plated layer may have a potential lower than a potential of the ferritic stainless steel material of the tubular member and a potential of the ferritic stainless steel material of the bracket. The ferritic stainless steel material of the bracket may have a potential lower than a potential of the ferritic steel material of the tubular member.

## Description

### BACKGROUND

### 1. TECHNICAL FIELD

The present invention relates to an installing structure for installing on a vehicle a tubular member to be connected to a fuel tank, and a piping structure.

### 2. RELATED ART

A tubular member to be connected to a fuel tank includes, for example, a filler tube configured to lead fuel from a fuel inlet to the fuel tank, a breather tube configured to ventilate space that is above a liquid surface of the fuel tank to discharge gas out of the fuel tank, and the like. According to an installing structure for installing such a tubular member on a vehicle, a bracket to hold the tubular member is installed on the vehicle via a fastener such as a bolt. Accordingly, the tubular member is mounted on the vehicle.

Brackets of this type are generally classified into two manners. The first manner of the two manners is a manner of installing a bracket constituted of one component on a vehicle, the bracket being in a state of being mounted on a tubular member by welding. The second manner is a manner of setting brackets to be constituted of two components including a pair of bracket pieces. According to the second manner, the pair of bracket pieces are bolt-fastened sandwiching the tubular member therebetween to hold the tubular member. The brackets holding the tubular member is installed on the vehicle (as a disclosure of a related technology, see the descriptions of Patent Document 1 and Patent Document 2, for example).

### [PRIOR ART LITERATURE]

### [Patent Document]

[Patent Document 1] Japanese Patent Application Publication No. 2004-329187
[Patent Document 2] Japanese Patent Application Publication No. 2007-216935

### [PROBLEMS TO BE SOLVED BY THE INVENTION]

Now, similar to the brackets, a steel-made material has been used for this type of tubular member such as the filler tube and the breather tube. However, from the point of view of weight reduction, corrosion resistance or the like, a stainless steel material has been used nowadays. From the point of view of material cost, a ferritic stainless steel material has been often used as the stainless steel material.

Because the tubular member is formed of the ferritic stainless steel material, similar to the bracket, there is a possibility that the crevice corrosion issue occurs.

That is, a small crevice exists between the tubular member and the bracket that are in contact with each other. Muddy water, sea water or the like intrude into such a crevice, particularly, into a deep portion of the crevice due to capillary phenomenon. Further, the muddy water, sea water or the like intruding into this crevice includes chlorine and the like. Accordingly, the chlorine and the like are bonded to oxygen inside the crevice and a chemical reaction is produced, which consumes the oxygen inside the crevice. Due to such oxygen consumption, a difference in oxygen concentrations is generated between the deep portion of the crevice and an opening end of the crevice. Accordingly, an oxygen concentration cell including chlorine ion and the like is formed therein.

In this way, once an oxygen concentration cell is formed inside the crevice, an oxide film formed on a surface of the stainless steel material being the raw material of the tubular member and the bracket is broken due to crevice corrosion. The tubular member in which such crevice corrosion is generated has significantly-reduced original corrosion resistance of the ferritic stainless material. Due to such crevice corrosion, pitting corrosion is likely to be generated.

In a case in which the pitting corrosion caused by the deterioration in such corrosion resistance is generated on the tubular member side, there is a possibility that airtightness of the fuel tank cannot be maintained.

Here, how the crevice corrosion is related to each of the above-described conventional two manners is examined as below.

In other words, in the former of the above-described conventional two manners, that is, in the case in which the bracket constituted of one component is used, an end portion of the bracket is welded to the tubular member by MIG welding and the like. A surface of the end portion of the bracket installed on the tubular member has a shape along a circumferential face of the tubular member. However, a part of the end portion of the bracket may be slightly deformed due to heat applied to the bracket when being welded to the tubular member. According to such a deformation, a crevice between a portion of the bracket that is unwelded and the tubular member may be generated. As long as such a crevice exists, even if it is small, muddy water, sea water or the like may intrude into the crevice by capillary phenomenon. Then, once the muddy water, sea water or the like intrude into the crevice, an oxygen concentration cell including chlorine ion and the like is formed therein. Accordingly, the crevice corrosion is generated in the tubular member along with the bracket. To inhibit the crevice corrosion, cation painting has been performed on a conventional tubular member in a state of being installed on the bracket. However, increase of working man-hours and increase of cost caused by the cation painting occur. In addition, it is difficult to perform the cation painting to the deep portion of the crevice caused by welding. Therefore, it is difficult to completely prevent the crevice corrosion generated in the crevice caused by welding.

Also, in the latter of the above-described conventional two manners, that is, in the case in which the brackets are constituted of two components and the pair of bracket pieces sandwich the tubular member therebetween and are bolt-fastened so that the brackets are installed on the vehicle in a state of holding the tubular member, a crevice is formed between the pair of bracket pieces and the tubular member that are in contact with each other. If muddy water, sea water or the like intrude into such a crevice, an oxygen concentration cell including chlorine ion and the like is formed in the crevice. Accordingly, the crevice corrosion is generated in the tubular member and the bracket. To inhibit such crevice corrosion, conventionally, it is necessary to perform the cation painting on respective surfaces of the tubular member and the bracket in a state in which the tubular member and the bracket are separate parts before being fixed to each other. Such cation painting has been a factor of the increase of working man-hours and the increase of cost.

Here, the issue of perforation corrosion due to the crevice corrosion caused by the oxygen concentration cell as described above can be solved by configuring the tubular member and the bracket by using austenitic stainless steel that has excellent crevice corrosion resistance.

However, when welding the tubular member and the bracket that are formed of the austenitic stainless steel material, a new issue occurs that stress corrosion cracking occurs on a crystal grain boundary of the welded portion, and material cost increases.

Therefore, it has to be said that the manner of welding, by a welding method, the tubular member and the bracket that are formed of the austenitic stainless steel material is not practical.

Here, the present invention is to provide a structure for installing a tubular member on a vehicle, which inhibits the crevice corrosion to surely prevent the perforation corrosion from generating and contributes to weight and cost reductions of automobiles even if the tubular member, such as a filler tube and a breather tube, is formed by using the ferritic stainless steel material advantageous in the material cost along with the bracket.

### [GENERAL DISCLOSURE]

The structure for installing a tubular member on a vehicle according to one aspect of the present invention may be an installing structure for installing on a vehicle a tubular member to be connected to a fuel tank. The installing structure may include a bracket to be provided on a circumferential surface of the tubular member. The tubular member may be formed of a ferritic stainless steel material. The bracket may be formed of a ferritic stainless steel material having a surface on which an aluminum plated layer is formed. The aluminum plated layer may have a potential lower than a potential of the ferritic stainless steel material of the tubular member and a potential of the ferritic stainless steel material of the bracket. The ferritic stainless steel material of the bracket may have a potential lower than a potential of the ferritic stainless steel material of the tubular member.

According to one aspect of the present invention, the aluminum plated layer exists between the tubular member and the bracket. A potential difference occurs between the aluminum plated layer, the tubular member and the bracket. Accordingly, first, potential difference corrosion occurs in the aluminum plated layer. As a result, the aluminum plated layer exhibits a sacrificial corrosion prevention effect, thereby inhibiting generation of rust on the tubular member side. Consequently, the perforation corrosion at the tubular member is surely prevented, and airtightness of a fuel tank is surely maintained.

Further, the ferritic stainless steel material of the bracket has a potential lower than that of the ferritic stainless steel material of the tubular member. Because of the potential difference, even if the aluminum plated layer is entirely corroded by the potential difference corrosion, potential difference corrosion by the potential difference from that of the tubular member is preferentially generated on the bracket side before the oxygen concentration cell is formed in a crevice or welded portion between the tubular member and the bracket. As a result, the bracket side exhibits the sacrificial corrosion prevention effect, thereby inhibiting the generation of rust caused by the crevice corrosion on the tubular member side. Consequently, the perforation corrosion at the tubular member is surely prevented and the airtightness of the fuel tank can be surely maintained.

Also, according to one aspect of the present invention, the crevice corrosion can be inhibited even if a prevention solution against generation of rust, such as the cation painting, is not performed on the tubular member and the bracket. Therefore, reduction of manufacturing man-hours of automobiles can be realized. In addition, the ferritic stainless steel material can be used to form both of the tubular member and the bracket. Accordingly, the present invention can contribute to the weight reduction and the material cost reduction of automobiles.

According to one aspect of the present invention, the ferritic stainless steel material of the tubular member may be a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass%, and N of ≤ 0.015 mass% and that has a balance including incidental impurities and Fe (hereinafter, the ferritic stainless steel material may be abbreviated as "SUS436 material"). The ferritic stainless steel material of the bracket may be a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed (hereinafter, the ferritic stainless steel material may be abbreviated as "SUS409 AL material"). Otherwise, the ferritic stainless steel material of the bracket may be a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass%, that has a balance including incidental impurities and Fe and that has a surface on which the aluminum plated layer is formed (hereinafter, the ferritic stainless steel material may be abbreviated as "SUS439 AL material").

According to one aspect of the present invention, the SUS436 material is used to form the tubular member. On the other hand, the SUS409 AL material or SUS439 AL material is used to form the bracket. Accordingly, the bracket is configured to have a potential lower than that of the tubular member by having the aluminum plated layer. Because of the potential difference, the potential difference corrosion due to the potential difference from that of the tubular member is preferentially generated on the bracket side before the oxygen concentration cell is formed in the crevice or welded portion between the tubular member and the bracket. As a result, the bracket side exhibits the sacrificial corrosion prevention effect by the aluminum plated layer, thereby inhibiting the generation of rust on the tubular member side. Consequently, the perforation corrosion on the tubular member side is surely prevented and the airtightness of the fuel tank can be surely maintained.

Furthermore, the bracket that is formed of the SUS409 material being a base material in SUS409 AL or the SUS439 material being a base material in SUS439 AL has a potential lower than that of the tubular member that is formed of SUS436 material. Therefore, even if the aluminum plated layer formed on the bracket is entirely corroded by the potential difference corrosion, the potential difference corrosion caused by the potential difference from that of the tubular member is preferentially generated on the bracket side in the crevice or welded portion between the tubular member and the bracket. Accordingly, the generation of rust on the tubular member side can be inhibited by the sacrificial corrosion prevention effect on the bracket side. As a result, the perforation corrosion at the tubular member can be surely prevented and the airtightness of the fuel tank is surely maintained.

According to one aspect of the present invention, the ferritic stainless steel material of the tubular member may be a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass% and that has a balance including incidental impurities and Fe (hereinafter, the ferritic stainless steel material may be abbreviated as "SUS439 material"). The ferritic stainless steel material of the bracket may be a SUS409 AL material, that is, a ferritic stainless steel material ("SUS409 AL material") that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed.

According to one aspect of the present invention, the tubular member is formed of the SUS439 material. On the other hand, the bracket is formed of the SUS409 AL material. Accordingly, the bracket is configured to have a potential lower than that of the tubular member by having the aluminum plated layer. Because of the potential difference, the potential difference corrosion caused by the potential difference from that of the tubular member is preferentially generated on the bracket side before the oxygen concentration cell is formed in the crevice or welded portion between the tubular member and the bracket. As a result, the bracket side exhibits the sacrificial corrosion prevention effect by the aluminum plated layer, thereby inhibiting the generation of rust on the tubular member side. Consequently, the perforation corrosion on the tubular member side is surely prevented and the airtightness of the fuel tank can be surely maintained.

Furthermore, the bracket is formed of the SUS409 AL material. The bracket formed of the SUS409 material being a base material in SUS409 AL material has a potential lower than that of the tubular member formed of the SUS439 material. Therefore, even if the aluminum plated layer of the bracket is entirely corroded by the potential difference corrosion, the potential difference corrosion caused by the potential difference from that of the tubular member is preferentially generated on the bracket side in the crevice or welded portion between the tubular member and the bracket. Accordingly, the generation of rust on the tubular member side can be inhibited by the sacrificial corrosion prevention effect on the bracket side. As a result, the perforation corrosion at the tubular member can be surely prevented and the airtightness of the fuel tank can be surely maintained.

According to one aspect of the present invention, a bracket may be welded to a tubular member.

Also, according to one aspect of the present invention, a bracket may be constituted of a pair of bracket pieces that are configured to sandwich and hold a tubular member. One bracket piece of the pair of bracket pieces may be supported by a vehicle so that the tubular member may be mounted on the vehicle. The ferritic stainless steel material of the tubular member may be a ferritic stainless steel material (SUS436 material) that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass%, and N of ≤ 0.015 mass% and that has a balance including incidental impurities and Fe. A ferritic stainless steel material of one of the bracket pieces may be a ferritic stainless steel material (SUS409 AL material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed. The ferritic stainless steel material of the other bracket piece of the pair of bracket pieces may be a ferritic stainless steel material (SUS409 material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass% and that has a balance including incidental impurities and Fe. Otherwise, the ferritic stainless steel material of the other bracket piece may be a ferritic stainless steel material (SUS409 AL material) containing C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed.

According to one aspect of the present invention, the SUS436 material is used to form the tubular member. Further, the SUS409 AL material is used to form one of the bracket pieces, and the SUS409 material or SUS409 AL material is used to form the other bracket piece. Accordingly, at least one of the bracket pieces is configured to have the aluminum plated layer on its surface and have a potential lower than the tubular member. Because of the potential difference, the potential difference corrosion caused by the potential difference from that of the tubular member is preferentially generated on the one bracket piece side before the oxygen concentration cell is formed in the crevice between the tubular member and the at least one of the bracket pieces. As a result, the at least one of the bracket pieces exhibits the sacrificial corrosion prevention effect, thereby inhibiting the generation of rust on the tubular member side. Consequently, the perforation corrosion on the tubular member side is surely prevented and the airtightness of the fuel tank can be surely maintained.

Furthermore, according to one aspect of the present invention, even if the aluminum plated layer on the one bracket piece side is entirely corroded by the potential difference corrosion caused by the oxygen concentration cell, the pair of bracket pieces formed of the SUS409 material or the SUS409 AL material has a potential lower than that of the tubular member formed of the SUS436 material. The potential difference corrosion due to the potential difference from that of the tubular member is preferentially generated on the at least one of the bracket pieces before the oxygen concentration cell is formed in the crevice or welded portion between the tubular member and the at least one of the bracket pieces. Accordingly, the generation of rust on the tubular member side can be inhibited by the sacrificial corrosion prevention effect on the at least one of the bracket pieces. As a result, the perforation corrosion at the tubular member is surely prevented and the airtightness of the fuel tank is surely maintained.

According to one aspect of the present invention, the bracket may be constituted of the pair of bracket pieces configured to sandwich and hold the tubular member. One bracket piece of the pair of bracket pieces may be supported by a vehicle so that the tubular member may be mounted on the vehicle. A ferritic stainless steel material of one bracket piece of the pair of bracket pieces may have a potential lower than a potential of the ferritic stainless steel material of the other bracket piece.

One of the bracket pieces is configured to have a potential lower than that of the other bracket piece. Because of the potential difference, the potential difference corrosion caused by the potential difference is caused to be preferentially generated on the one of the bracket pieces than the other bracket piece. As a result, the one of the bracket pieces preferentially exhibits the sacrificial corrosion prevention effect than the other bracket piece, thereby inhibiting the generation of rust on the tubular member side. Consequently, the perforation corrosion on the tubular member side is surely prevented and the airtightness of the fuel tank can be surely maintained.

According to one aspect of the present invention, brackets may be constituted of a pair of bracket pieces configured to sandwich and hold a tubular member. One bracket piece of the pair of bracket pieces may be supported by a vehicle so that the tubular member may be mounted on the vehicle. The ferritic stainless steel material of the tubular member may be a ferritic stainless steel material (SUS436 material) that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass%, and N of ≤ 0.015 mass% and that has a balance including incidental impurities and Fe. A ferritic stainless steel material of one bracket piece of the pair of bracket pieces may be a ferritic stainless steel material (SUS439 material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass% and that has a balance including incidental impurities and Fe. The ferritic stainless steel material of the other bracket piece of the pair of bracket pieces may be a ferritic stainless steel material (SUS409 AL material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed.

According to one aspect of the present invention, the tubular member is formed of the SUS436 material. One of the bracket pieces is formed of the SUS439 material. Further, the other bracket piece is formed of the SUS409 AL material. Accordingly, the other bracket piece side is configured to have an aluminum plated layer on its surface and have a potential lower than that of the tubular member side. Because of the potential difference, the potential difference corrosion caused by the potential difference from that of the tubular member is preferentially generated on the other bracket piece side before the oxygen concentration cell is formed in the crevice between the tubular member and the pair of bracket pieces. As a result, the other bracket piece side exhibits the sacrificial corrosion prevention effect, thereby inhibiting the generation of rust on the tubular member side. Consequently, the perforation corrosion on the tubular member side is surely prevented and the airtightness of the fuel tank can be surely maintained.

Furthermore, in an embodiment of the present invention, even if the aluminum plated layer of the other bracket piece side is entirely corroded by the potential difference corrosion, the other bracket piece formed of the SUS409 material being the base material in the SUS409 AL material has a potential lower than that of the tubular member formed of the SUS436 material. Accordingly, the potential difference corrosion caused by the potential difference from that of the tubular member is preferentially generated on the other bracket piece side before the oxygen concentration cell is formed in the crevice or welded portion between the tubular member and the other bracket piece, and the generation of rust on the tubular member side can be inhibited by the sacrificial corrosion prevention effect on the other bracket piece side. As a result, the perforation corrosion at the tubular member is surely prevented and the airtightness of the fuel tank is surely maintained.

According to one aspect of the present invention, the bracket may be constituted of a pair of bracket pieces configured to sandwich and hold a tubular member. One bracket piece of the pair of bracket pieces may be supported by a vehicle so that the tubular member may be mounted on the vehicle. The ferritic stainless steel material of the tubular member may be a ferritic stainless steel material (SUS436 material) that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass%, and N of ≤ 0.015 mass% and that has a balance including incidental impurities and Fe. A ferritic stainless steel material of one bracket piece of the pair of bracket pieces may be a ferritic stainless steel material (SUS439 AL material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass%, that has a balance including incidental impurities and Fe and that has a surface on which the aluminum plated layer is formed. The ferritic stainless steel material of the other bracket piece of the pair of bracket pieces may be a ferritic stainless steel material (SUS409 material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass% and that has a balance including incidental impurities and Fe.

According to one aspect of the present invention, the tubular member is formed of the SUS436 material. One of the bracket pieces is formed of the SUS439 AL material and the other bracket piece is formed of the SUS409 material. Accordingly, the one bracket piece side is configured to have an aluminum plated layer on its surface and have a potential lower than that of the tubular member. Because of the potential difference, the potential difference corrosion caused by the potential difference from that of the tubular member is preferentially generated on the one bracket piece side before the oxygen concentration cell is formed in the crevice between the tubular member and the pair of bracket pieces. As a result, the one bracket piece side exhibits the sacrificial corrosion prevention effect, thereby inhibiting the generation of rust on the tubular member side. Consequently, the perforation corrosion on the tubular member side can be surely prevented and the airtightness of the fuel tank can be surely maintained.

Furthermore, the other bracket piece formed of the SUS409 material has a potential lower than that of the tubular member formed of the SUS436 material. Even if the aluminum plated layer of the one bracket piece side is entirely corroded by the potential difference corrosion, the potential difference corrosion caused by the potential difference from that of the tubular member is preferentially generated in the other bracket piece side before the oxygen concentration cell is formed in the crevice between the tubular member and the other bracket piece side. Accordingly, the generation of rust on the tubular member side can be inhibited by the sacrificial corrosion prevention effect of the other bracket piece side. As a result, the perforation corrosion at the tubular member is surely prevented and the airtightness of the fuel tank is surely maintained.

According to one aspect of the present invention, the bracket may be constituted of a pair of bracket pieces configured to sandwich and hold a tubular member. One bracket piece of the pair of bracket pieces may be supported by a vehicle so that the tubular member may be mounted on the vehicle. The ferritic stainless steel material of the tubular member may be a ferritic stainless steel material (SUS436 material) that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass%, and N of ≤ 0.015 mass% and that has a balance including incidental impurities and Fe. A ferritic stainless steel material of one bracket piece of the pair of bracket pieces may be a ferritic stainless steel material (SUS439 AL material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass%, that has a balance including incidental impurities and Fe and that has a surface on which an aluminum plated layer is formed. The ferritic stainless steel material of the other bracket piece of the pair of bracket pieces may be a ferritic stainless steel material (SUS439 material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass% and that has a balance including incidental impurities and Fe. Otherwise, the ferritic stainless steel material of the other bracket piece may be a ferritic stainless steel material (SUS439 AL material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass%, that has a balance including incidental impurities and Fe and that has a surface on which an aluminum plated layer is formed.

According to one aspect of the present invention, the tubular member is formed of the SUS436 material. One of the bracket pieces is formed of the SUS439 AL material, and the other bracket piece is formed of the SUS439 material or the SUS439 AL material. Accordingly, at least one of the bracket pieces is configured to have the aluminum plated layer on its surface and have a potential lower than that of the tubular member. Because of the potential difference, the potential difference corrosion caused by the potential difference from that of the tubular member is preferentially generated in the at least one of the bracket pieces before the oxygen concentration cell is formed in the crevice between the tubular member and the pair of bracket pieces. As a result, the at least one of the bracket pieces exhibits the sacrificial corrosion prevention effect, thereby inhibiting the generation of rust on the tubular member side. Consequently, the perforation corrosion on the tubular member side is surely prevented and the airtightness of the fuel tank can be surely maintained.

According to one aspect of the present invention, the bracket may be constituted of a pair of bracket pieces configured to sandwich and hold a tubular member. One bracket piece of the pair of bracket pieces may be supported by a vehicle so that the tubular member may be mounted on the vehicle. The ferritic stainless steel material of the tubular member may be a ferritic stainless steel material (SUS439 material) that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass%, and N of ≤ 0.015 mass% and that has a balance including incidental impurities and Fe. A ferritic stainless steel material of one bracket piece of the pair of bracket pieces may be a ferritic stainless steel material (SUS409 AL material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass% , that has a balance including incidental impurities and Fe and that has a surface on which an aluminum plated layer is formed. The ferritic stainless steel material of the other bracket piece of the pair of bracket pieces may be a ferritic stainless steel material (SUS409 material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass% and that has a balance including incidental impurities and Fe. Otherwise, the ferritic stainless steel material of the other bracket piece may be a ferritic stainless steel material (SUS409 AL material) that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass%, and N of ≤ 0.015 mass%, that has a balance including incidental impurities and Fe and that has a surface on which an aluminum plated layer is formed.

By the configuration, according to one aspect of the present invention, the tubular member is formed of the SUS439 material. One of the bracket pieces is formed of the SUS409 AL material. The other bracket piece is formed of the SUS409 material or the SUS409 AL material. That is, the pair of bracket pieces have a potential lower than that of the tubular member. Because of this potential difference, the potential difference corrosion due to the potential difference from that of the tubular member is preferentially generated on both of the bracket pieces before the oxygen concentration cell is formed in the crevice between the tubular member and the two bracket pieces. As a result, both of the bracket pieces exhibit the sacrificial corrosion prevention effect, thereby inhibiting the generation of rust on the tubular member side. The perforation corrosion on the tubular member side can be surely prevented and the airtightness of the fuel tank can be surely maintained.

Furthermore, according to one aspect of the present invention, even if an aluminum plated layer of at least one of the bracket pieces is entirely corroded by the potential difference corrosion, the potential difference corrosion due to the potential difference from that of the tubular member is preferentially generated on the pair of bracket pieces before the oxygen concentration cell is formed in the crevice between the tubular member and the pair of bracket pieces. Accordingly, the generation of rust on the tubular member side can be inhibited by the sacrificial corrosion prevention effect on the bracket side. As a result, the perforation corrosion at the tubular member can be surely prevented and the airtightness of the fuel tank can be surely maintained.

According to one aspect of the present invention, the installing structure may further include a bolt configured to fix a pair of bracket pieces to each other with the tubular member sandwiched therebetween. The bolt may have a lower potential than that of the tubular member sandwiched between the pair of bracket pieces. The tubular member may include at least one of a filler tube configured to lead fuel from a fuel inlet to the fuel tank and a breather tube configured to discharge gas out of the fuel tank.

According to one aspect of the present invention, the installing structure may further include another bolt for fixing the bracket to the vehicle. The other bolt may have a potential lower than that of the tubular member.

The piping structure according to one aspect of the present invention may include the above-described installing structure and the above-described tubular member.

According to one aspect of the present invention, the bracket is configured to have a potential lower than that of the tubular member. Therefore, because of this potential difference, the potential difference corrosion due to the potential difference from that of the tubular member is preferentially generated on the bracket side before the oxygen concentration cell is formed in the crevice or welded portion between the tubular member and the bracket. As a result, the bracket side exhibits the sacrificial corrosion prevention effect, thereby inhibiting the generation of rust on the tubular member side. Consequently, the perforation corrosion at the tubular member can be surely prevented and the airtightness of the fuel tank can be surely maintained.

Also, according to one aspect of the present invention, the crevice corrosion at the tubular member can be inhibited even if a prevention solution against generation of rust, such as the cation painting, is not performed on the tubular member and the bracket. Accordingly, the reduction of manufacturing man-hours of automobiles can be realized. Also, because the tubular member and the bracket are both formed of the ferritic stainless steel material, the tubular member and the bracket can contribute to the weight reduction of the automobiles and the reduction of material cost.

### BRIEF DESCRIPTION OF THE DRAWINGS

Fig. 1 is a perspective view roughly illustrating a state in which a filler tube for leading fuel from a fuel inlet to a fuel tank is set in a common automobile along with a breather tube that is used as an additional pipe to be installed on a vehicle of the automobile.
Fig. 2 is a longitudinal section view illustrating an enlarged inner portion the circle A shown by the one-dot chain line in Fig. 1.
Fig. 3 is a longitudinal section view illustrating an enlarged inner portion the circle B shown by the one-dot chain line in Fig. 1,
Fig. 4 is a component table of each ferritic stainless steel material forming the filler tube, the breather tube or the bracket according to embodiments.
Fig. 5 is a table describing combinations of the ferritic stainless steel material, shown in Fig. 4, forming the filler tube, the breather tube and the bracket respectively formed in Embodiment 1 to Embodiment 3.
Fig. 6 is a table describing combinations of the ferritic stainless steel material, shown in Fig. 4, forming the filler tube, the breather tube and one bracket piece and the other bracket piece respectively formed in Embodiment 4 to Embodiment 11.
Fig. 7 is a table showing an average potential (V) of the ferritic stainless steel material, shown in Fig. 4, forming the filler tube, the breather tube or the bracket.
Fig. 8 is a C-C cross section view in Fig. 2.
Fig. 9 is a comparison graph of a residual ratio of plate thicknesses according to a CCT cycle test (corrosion acceleration cycle test), as a difference in sacrificial corrosion prevention effect in accordance with material difference, between a case in which the SUS439 material is set as the material of the filler tube and the breather tube and a case in which the SUS409 material or the SUS439 AL material is set as the material of the bracket.

### DESCRIPTION OF EXEMPLARY EMBODIMENTS

A structure for installing a tubular member according to an embodiment on a vehicle is configured so that the crevice corrosion can be inhibited and the perforation corrosion can be surely prevented from generating, thereby contributing to weight and cost reductions of automobiles, even if a ferritic stainless steel material which is advantageous in terms of material cost is used for the tubular member and a bracket.

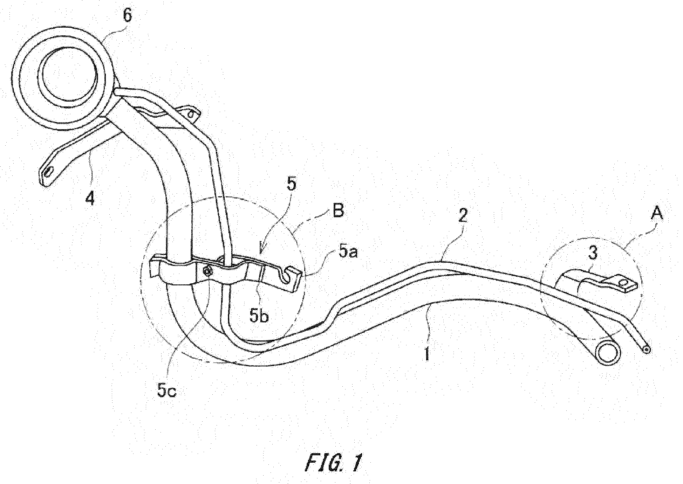

Next, the structure for installing the tubular member according to an embodiment on the vehicle is described by using Fig. 1 to Fig. 9.

First, the structure for installing the tubular member on the vehicle shown in Fig. 1 is to install a filler tube 1 and a breather tube 2 that are one example of the tubular member on the vehicle via three brackets 3, 4 and 5. The filler tube 1 is a tube for leading fuel from a fuel inlet to a fuel tank in an automobile. The breather tube 2 is an additional pipe to ventilate space above a liquid surface of the fuel tank. The breather tube 2 is a tube to discharge gas out of the fuel tank. The filler tube 1 and the breather tube 2 are mounted on the vehicle by installing the brackets 3, 4 and 5 on the vehicle by using a fastener such as a bolt. One end side of the filler tube 1 mounted on the vehicle is connected to an oil feeding port formed in the vehicle via a filler cap protector 6, and the other end side is connected to the above-described fuel tank. The filler tube 1, the breather tube 2 and at least one bracket of the brackets 3, 4 and 5 are one example of a piping structure. The piping structure may include the filler tube 1, the breather tube 2 and the brackets 3, 4 and 5.

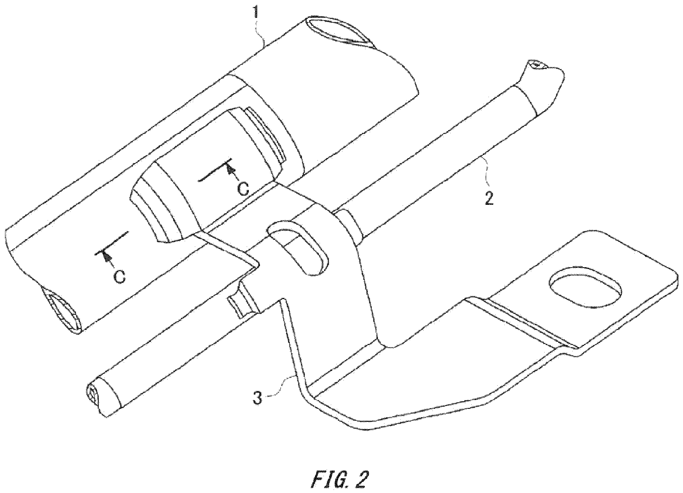

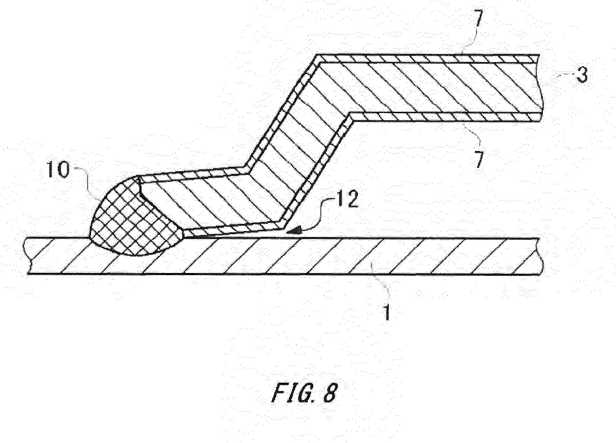

Among the above-described three brackets 3, 4 and 5, the bracket 3 that is a single configuration and is arranged on the fuel tank side is configured by shaping a plate material made of ferritic stainless steel material in an approximate L shape, as shown in Fig. 2. One end side of the bracket 3 is respectively welded to circumferential faces of the filler tube 1 and the breather tube 2 by MIG welding and the like. For example, as shown in Fig. 8, one end side of the bracket 3 is welded to the circumferential face of the filler tube 1 by MIG welding to form a weld bead 10. Here, the bracket 3 may be deformed by thermal effect due to the welding, and a crevice 12 may be generated between an unwelded portion of the bracket 3 and the filler tube 1.

The bracket 4 that is a single configuration and is arranged on the filler cap protector 6 is configured by shaping the plate material made of ferritic stainless steel material in an approximately straight line shape. An approximate central portion of the bracket 4 is welded to the circumferential face of the filler tube 1 by MIG welding and the like. One end side of the bracket 4 is welded to the circumferential face of the breather tube 2 by MIG welding and the like.

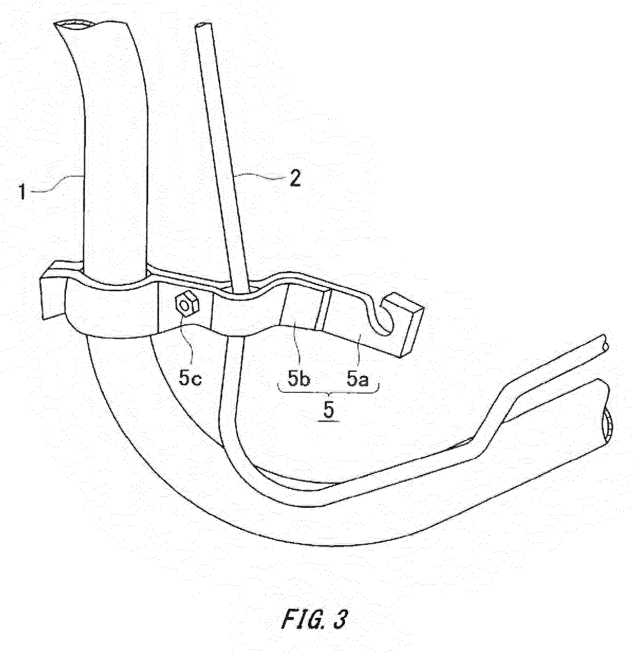

Further, as shown in Fig. 3, the bracket 5 arranged between the bracket 3 and the bracket 4 is constituted of two components, that is, one bracket piece 5a and the other bracket piece 5b, the one bracket piece 5a being set in a long-sized configuration and the other bracket piece 5b being set in a short-sized configuration. Then, the two bracket pieces 5a, 5b sandwich and hold the filler tube 1 and the breather tube 2 therebetween in a state in which one end of the bracket piece 5a and one end of the bracket piece 5b are overlapped with each other. Then, the two bracket pieces 5a, 5b are fastened to each other, by a bolt 5c that is a fastener, at an intermediate portion between the filler tube 1 and the breather tube 2. Accordingly, the filler tube 1 and the breather tube 2 are held by the two bracket pieces 5a, 5b. The bracket 5 constituted of the pair of bracket pieces 5a, 5b is referred to as a so-called "sandwich type" bracket.

Then, as described above, the filler tube 1 that is held together with the breather tube 2 by the brackets 3, 4 and 5 is mounted on the vehicle, by installing, on the vehicle by using a bolt or the like being a fastener, the other end side of the bracket 3 and both end sides of the bracket 4, and further a protruding end side of the bracket piece 5a being the long-sized configuration, the protruding end side protruding with respect to the bracket piece 5b being the short-sized configuration in the bracket 5.

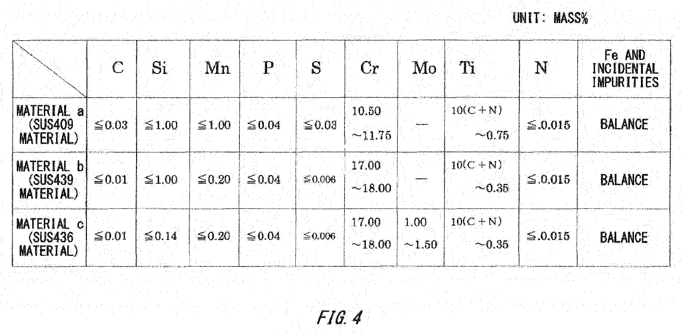

Then, in the present embodiment, ferritic stainless steel materials respectively mainly having a material a, a material b and a material c as shown in Fig. 4 are respectively used to form the filler tube 1, the breather tube 2 or the brackets 3, 4 and 5. (Note that specific usage of any one of these ferritic steel materials for the filler tube 1 or the brackets 3, 4 and 5 is described below.)

First, the material a (SUS409 material) corresponds to the JIS standard SUS409 steel material, and is a ferritic stainless steel having a chemical composition containing components of mass% described next, as shown in Fig. 4.

C: ≤ 0.030 mass%; Si: ≤ 1.00 mass%; Mn: ≤ 1.00 mass%; P: ≤ 0.040 mass%; S: ≤ 0.030 mass%; Cr: 10.50 to 11.75 mass%; Ti: ≤ 10(C+N) to 0.75 mass%; N: ≤ 0.015 mass%, and balance: Fe and incidental impurities

Also, the material b (SUS439 material) is a ferritic stainless steel having a chemical composition containing components of mass% described next, as shown in Fig. 4.

C: ≤ 0.010 mass%; Si: ≤ 1.00 mass%; Mn: ≤ 0.20 mass%; P: ≤ 0.040 mass%; S: ≤ 0.006 mass%; Cr: 17.00 to 18.00 mass%; Ti: ≤ 10(C+N) to 0.35 mass%; N: ≤ 0.015 mass%, and balance: Fe and incidental impurities

Furthermore, the material c (SUS436 material) is a ferritic stainless steel having a chemical composition containing components of mass% described next, as shown in Fig. 4.

C: ≤ 0.010 mass%; Si: ≤ 0.14 mass%; Mn: ≤ 0.20 mass%; P: ≤ 0.040 mass%; S: ≤ 0.006 mass%; Cr: 17.00 to 18.00 mass%; Mo: 1.00 to 1.50 mass%; Ti: ≤ 10(C+N) to 0.35 mass%; N: ≤ 0.015 mass%, and balance: Fe and incidental impurities

Next, Embodiments 1 to 11 are sequentially described as specific examples according to the structure for installing, on the vehicle, the tubular member, such as the filler tube and the breather tube, formed by selectively using the ferritic stainless steels having such chemical compositions.

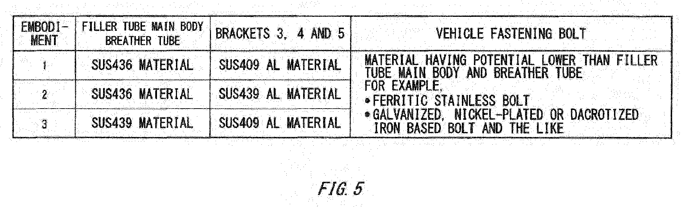

Then, the filler tube 1 in the Embodiments 1 to 3 is formed of the ferritic stainless steel material including one of the SUS436 material or the SUS439 material as respectively shown in Fig. 5. The brackets 3, 4 and 5 are formed of the SUS409 material, or the SUS409 AL material that is an aluminum plated steel material configured to have an aluminum plated layer (oxide film layer) on a surface of the SUS439 material, the aluminum plated layer having plated pure aluminum or common aluminum alloy that contains silicon of 8% and that has a balance including pure aluminum, or the SUS439 AL material, for example. Also, the vehicle fastening bolt for installing the brackets 3, 4 and 5 on the vehicle may be formed of a material having a potential (standard electrode potential) lower than that of the filler tube 1, for example, a ferritic stainless bolt, or a galvanized, nickel-plated or Dacrotized iron based bolt. The breather tube 2 is formed of the same material as that of the filler tube 1. The breather tube 2 is formed of a ferritic stainless steel material including one of the SUS436 material or the SUS439 material.

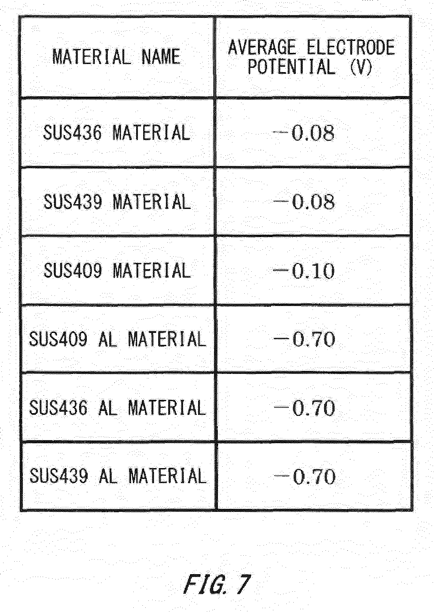

Also, each ferritic stainless steel material respectively forming the filler tube 1, the breather tube 2 and the brackets 3, 4 and 5 in the Embodiments 1 to 3 respectively has an average potential (standard electrode potential) (V) as shown in Fig. 7.

The average potential (V) is obtained by measuring corrosion potential of each ferritic stainless steel material (including the aluminum plated steel material) under a measurement condition (corresponding to a measurement condition of CCT cycle test (corrosion acceleration cycle test) in a so-called salt-damaged area) that is four-hour immersion in an NaCl solution of 50 g/L that is heated at a temperature of 35°C.

Note that the above-described CCT cycle test is performed by measuring a corrosion degree of a steel material to which repeated drying and wetting have been applied in accordance with a change of the climate or humidity or a rainy weather and the like on an assumption of an atmospheric corrosion environment such as rainwater or saltwater in areas in various use environments for automobiles.

In Embodiment 1, the filler tube 1 is formed of the "SUS436 material" as shown in Fig. 5. On the other hand, the brackets 3, 4 and 5 are formed of the "SUS409 AL material" being a stainless steel material having plated aluminum. The breather tube 2 is formed of the "SUS436 material".

As a result, an aluminum plated layer 7 is respectively formed between the filler tube 1/the breather tube 2 and the bracket 3/ bracket 4/ bracket 5. For example, as shown in Fig. 8, the aluminum plated layer 7 is formed between the filler tube 1 and the bracket 3.

Then, as shown in Fig. 7, the stainless steel material including the "SUS439 material" has an average potential of "-0.08V". On the other hand, the stainless steel material including the "SUS409 material" has an average potential of "-0.10V". Also, the ferritic stainless steel material including the "SUS439 AL material" has an average potential of "-0.70V" because the aluminum plated layer 7 is formed on its surface.

Therefore, according to such a configuration, in Embodiment 1, the aluminum plated layer 7 formed of the ferritic stainless steel material including the SUS409 AL material on the brackets 3, 4 and 5 is interposed between the filler tube 1 and the brackets 3, 4 and 5. A potential difference between the filler tube 1 and the brackets 3, 4 and 5 is generated due to the existence of the aluminum plated layer 7. Then, the potential difference corrosion is preferentially generated in the aluminum plated layer 7 having a potential lower than that of the filler tube 1. As a result, the aluminum plated layer 7 on the brackets 3, 4 and 5 exhibits the sacrificial corrosion prevention effect and can inhibit generation of rust on the filler tube 1 side. Consequently, the perforation corrosion at the filler tube 1 can be surely prevented and the airtightness of the fuel tank can be surely maintained. Note that because the breather tube 2 is formed of the same material as that of the filler tube 1, the potential difference is similarly generated between the breather tube 2 and the brackets 3, 4 and 5. Accordingly, the aluminum plated layer 7 on the brackets 3, 4 and 5 exhibits the sacrificial corrosion prevention effect and can inhibit the generation of rust on the breather tube 2. Consequently, the perforation corrosion at the breather tube 2 can be surely prevented and the airtightness of the fuel tank can be surely maintained.

Furthermore, in Embodiment 1, the brackets 3, 4 and 5 formed of the stainless steel material including the "SUS409 material" that is a base material in the "SUS409 AL material" has an average potential of "-0.10V" to the filler tube 1 formed of the stainless steel material including the "SUS436 material". Therefore, even if the aluminum plated layer 7 is entirely corroded by the progress of the potential difference corrosion, the potential difference corrosion due to the potential difference from that of the filler tube 1 is preferentially generated on the brackets 3, 4 and 5 before the oxygen concentration cell is formed in a crevice or welded portion between the filler tube 1 and the brackets 3, 4 and 5. As a result, the aluminum plated layer 7 on the brackets 3, 4 and 5 exhibits the sacrificial corrosion prevention effect, thereby inhibiting the generation of rust on the filler tube 1 side. Similarly, the generation of rust on the breather tube 2 can also be inhibited. Consequently, the pitting corrosion at the filler tube 1 and the breather tube 2 can be surely prevented and the airtightness of the fuel tank can be surely maintained.

In addition, in Embodiment 1, the crevice corrosion of the filler tube 1 and the breather tube 2 can be inhibited even if the prevention solution against generation of rust, such as cation painting, is not performed on the filler tube 1, the breather tube 2 and the brackets 3, 4 and 5. Accordingly, a reduction of manufacturing man-hours for automobiles can be realized. Also, because the filler tube 1, the breather tube 2 and the brackets 3, 4 and 5 are all formed of the ferritic stainless steel materials, filler tube 1, the breather tube 2 and the brackets 3, 4 and 5 can contribute to the weight reduction and reduction of material cost of automobiles.

Next, in Embodiment 2, the filler tube 1 is formed of the "SUS436 material" as shown in Fig. 5. On the other hand, the brackets 3, 4 and 5 are formed of the "SUS439 AL material" having plated aluminum. The breather tube 2 is formed of the "SUS436 material".

As a result, the aluminum plated layer 7 is formed between the filler tube 1 and the breather tube 2 and the brackets 3, 4 and 5. For example, as shown in Fig. 8, the aluminum plated layer 7 is formed between the filler tube 1 and the bracket 3.

Then, as shown in Fig. 7, the stainless steel material including the "SUS436 material" has an average potential of "-0.08V". The stainless steel material including the "SUS439 AL material" has an average potential of "-0.70V" because the aluminum plated layer 7 is formed on its surface.

Therefore, according to the configuration, in Embodiment 2, the aluminum plated layer 7 formed of the stainless steel material including the SUS439 AL material on the brackets 3, 4 and 5 is interposed between the filler tube 1 and the brackets 3, 4 and 5. A potential difference between the filler tube 1 and the brackets 3, 4 and 5 is generated due to the existence of the aluminum plated layer 7. Then, the corrosion due to the potential difference corrosion is preferentially generated in the aluminum plated layer 7 having a potential lower than that of the filler tube 1. As a result, the aluminum plated layer 7 on the brackets 3, 4 and 5 exhibits the sacrificial corrosion prevention effect, thereby inhibiting the generation of rust on the filler tube 1 side. Similarly, the generation of rust on the breather tube 2 can also be inhibited. Consequently, the pitting corrosion at the filler tube 1 and the breather tube 2 can be surely prevented and the airtightness of the fuel tank can be surely maintained.

In addition, in Embodiment 2 as well, the crevice corrosion at the filler tube 1 and the breather tube 2 can be inhibited even if the prevention solution against generation of rust, such as cation painting, is not performed on the filler tube 1, the breather tube 2 and the brackets 3, 4 and 5. Therefore, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Next, in Embodiment 3, the filler tube 1 is formed of the "SUS439 material" as shown in Fig. 5; on the other hand, the brackets 3, 4 and 5 are formed of the "SUS409 AL material" of the stainless steel material having plated aluminum. The breather tube 2 is formed of the "SUS439 material".

Then, as shown in Fig. 7, the ferritic stainless steel material including the "SUS439 material" has an average potential of "-0.08V". On the other hand, the ferritic stainless steel material including the "SUS409 AL material" has an average potential of "-0.70V" because the aluminum plated layer 7 is formed on its surface.

Therefore, according to the configuration, in Embodiment 3, the aluminum plated layer 7 formed of the stainless steel material including the "SUS409 AL material" on the brackets 3, 4 and 5 is interposed between the filler tube 1 and the brackets 3, 4 and 5. The potential difference between the filler tube 1 and the brackets 3, 4 and 5 is generated due to the existence of the aluminum plated layer 7. Then, the potential difference corrosion is preferentially generated on the aluminum plated layer 7 side having a potential lower than that of the filler tube 1. As a result, the aluminum plated layer 7 on the brackets 3, 4 and 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 3, the crevice corrosion at the filler tube 1 and the breather tube 2 can be inhibited even if the prevention solution against generation of rust, such as cation painting, is not performed on the filler tube 1, the breather tube 2 and the brackets 3, 4 and 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

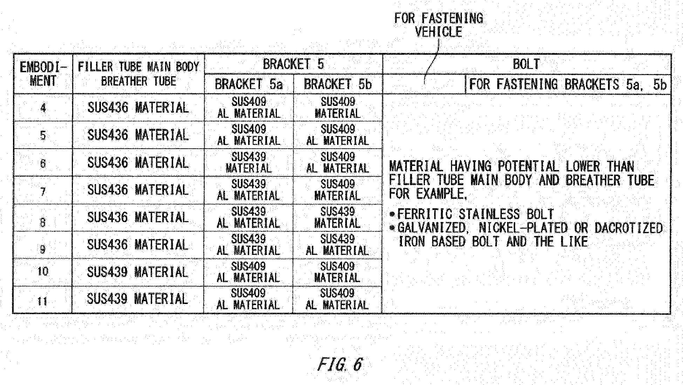

Next, Embodiment 4 to Embodiment 11 shown in Fig. 6 are described, Embodiment 4 to Embodiment 11 being for a case in which the bracket 5 as shown in Fig. 3 is constituted of the pair of bracket pieces 5a, 5b that sandwich and hold the filler tube 1 and the breather tube 2 therebetween. In Embodiment 4 to Embodiment 11, a vehicle fastening bolt for installing the bracket 5 on the vehicle is formed of a material having a potential (standard electrode potential) lower than that of the filler tube 1 and the breather tube 2, for example, a ferritic stainless bolt, or a galvanized, nickel-plated or Dacrotized iron based bolt. Also, a bolt 5c for fastening the bracket pieces 5a, 5b, which is for fixing the pair of brackets 5a, 5b to each other, is formed of a material having a potential (standard electrode potential) lower than that of the filler tube 1 and the breather tube 2, for example, a ferritic stainless bolt, or a galvanized, nickel-plated or Dacrotized iron based bolt. The breather tube 2 is formed of the same material as that of the filler tube 1.

First, in Embodiment 4 as shown in Fig. 6, the filler tube 1 is formed of the "SUS436 material". One bracket piece 5a of the bracket 5 is formed of the "SUS409 AL material". The other bracket piece 5b is formed of the "SUS409 material". The breather tube 2 is formed of the "SUS436 material".

As a result, the aluminum plated layer 7 is formed between the filler tube 1 and the breather tube 2 and the one bracket piece 5a.

Then, as shown in Fig. 7, the stainless steel material including the "SUS436 material" has an average potential of "-0.08V". On the other hand, the ferritic stainless steel material including the "SUS409 AL material" has an average potential of "-0.70V" because the aluminum plated layer 7 is formed on its surface. Also, the ferritic stainless steel material including the "SUS409 material" has an average potential of "-0.10V".

Therefore, according to the configuration, in Embodiment 4, the aluminum plated layer 7 formed of the ferritic stainless steel material including the "SUS409 AL material" on the one bracket piece 5a side is interposed between the filler tube 1 and the one bracket 5a. A potential difference between the filler tube 1 and the one bracket 5a is generated due to the existence of the aluminum plated layer 7. Then, the potential difference corrosion is preferentially generated in the aluminum plated layer 7 having a potential lower than that of the filler tube 1. As a result, the aluminum plated layer 7 on the one bracket 5a side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

Furthermore, in Embodiment 4, the one bracket 5a and the other bracket 5b has a potential lower than the potential of the filler tube 1. Therefore, even if the aluminum plated layer 7 is entirely corroded by the progress of the potential difference corrosion, the potential difference corrosion due to the potential difference from that of the filler tube 1 is preferentially generated on the two brackets 5a and 5b side before the oxygen concentration cell is formed in the crevice between the filler tube 1 and the bracket 5. AS a result, the bracket 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 4 as well, the crevice corrosion at the filler tube 1 and the breather tube 2 can be inhibited even if the prevention solution against generation of rust, such as cation painting, is not performed on the filler tube 1, the breather tube 2 and the bracket 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 5 as shown in Fig. 6 is formed of the "SUS436 material". The pair of bracket pieces 5a and 5b are formed of the "SUS409 AL material". The breather tube 2 is formed of the "SUS436 material".

As a result, the aluminum plated layer 7 is formed between the filler tube 1 and the breather tube 2 and the one bracket piece 5a and the other bracket piece 5b.

Then, as shown in Fig. 7, the stainless steel material including the "SUS436 material" has an average potential of "-0.08V". The ferritic stainless steel material including the "SUS409 AL material" has an average potential of "-0.70V" because the aluminum plated layer 7 is formed on its surface.

Therefore, according to the configuration, in Embodiment 5, the aluminum plated layer 7 formed of the ferritic stainless steel material including the "SUS409 AL material" is interposed between the filler tube 1 and the pair of brackets 5a and 5b. A potential difference between the filler tube 1 and the pair of brackets 5a and 5b is generated due to the existence of the aluminum plated layer 7. Then, the potential difference corrosion is preferentially generated in the aluminum plated layer 7 having a potential lower than that of the filler tube 1. As a result, the aluminum plated layer 7 on the pair of brackets 5a and 5b side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

Furthermore, in Embodiment 5, the one bracket 5a and the other bracket 5b have a potential lower than the potential of the filler tube 1. Even if the aluminum plated layer 7 is entirely corroded by the progress of the potential difference corrosion, the potential difference corrosion due to the potential difference from that of the filler tube 1 is preferentially generated on both of the brackets 5a and 5b side before the oxygen concentration cell is formed in the crevice between the filler tube 1 and the bracket 5. As a result, the bracket 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 5 as well, the crevice corrosion at the filler tube 1 and the breather tube 2 can be inhibited even if the prevention solution against generation of rust, such as cation painting, is not performed on the filler tube 1, the breather tube 2 and the bracket 5. Therefore, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 6 as shown in Fig. 6 is formed of the "SUS436 material". On the other hand, the one bracket piece 5a of the bracket 5 is formed of the "SUS439 material". The other bracket piece 5b is formed of the "SUS409 AL material". The breather tube 2 is formed of the "SUS436 material".

As a result, the aluminum plated layer 7 is formed between the filler tube 1, the breather tube 2 and the other bracket piece 5b. The ferritic stainless steel material including the "SUS439 material" has an average potential of "-0.08V".

Then, as shown in Fig. 7, the stainless steel material including the "SUS409 material" has an average potential of "-0.10V". The ferritic stainless steel material including the "SUS409 AL material" has an average potential of "-0.70V" because the aluminum plated layer 7 is formed on its surface.

Therefore, according to the configuration, in Embodiment 6, the aluminum plated layer 7 formed of the ferritic stainless steel material including the "SUS409 AL material" on the other bracket piece 5b side is interposed between the filler tube 1 and the other bracket 5b. A potential difference between the filler tube 1 and the other bracket 5b is generated due to the existence of the aluminum plated layer 7. Then, the potential difference corrosion is preferentially generated in the aluminum plated layer 7 having a potential lower than that of the filler tube 1. As a result, the aluminum plated layer 7 on the other bracket 5b side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 can be surely prevented and the airtightness of the fuel tank can be surely maintained.

Furthermore, in Embodiment 6, the "SUS409 material" being the base material of the other bracket piece 5b has an average potential relative to that of the filler tube 1 formed of the stainless steel material including the "SUS436 material" is "-0.10V" as shown in Fig. 7. Accordingly, even if the aluminum plated layer 7 is entirely corroded by the progress of the potential difference corrosion, the potential difference corrosion due to the potential difference from that of the filler tube 1 is preferentially generated on the other bracket 5b side before the oxygen concentration cell is formed in the crevice between the filler tube 1 and the bracket 5. As a result, the other bracket 5b side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 6 as well, the crevice corrosion at the filler tube 1 and the breather tube 2 can be inhibited even if the prevention solution against generation of rust, such as cation painting, is not performed on the filler tube 1, the breather tube 2 and the bracket 5. Accordingly, the reduction of manufacturing man-hours for automobiles can be realized. Further, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 7 as shown in Fig. 6 is formed of the "SUS436 material". The one bracket piece 5a of the bracket 5 is formed of the "SUS439 AL material". The other bracket piece 5b is formed of the "SUS409 material". The breather tube 2 is formed of the "SUS436 material".

As a result, the aluminum plated layer 7 is formed between the filler tube 1 and the breather tube 2 and the one bracket piece 5a.

Then, as shown in Fig. 7, the stainless steel material including the "SUS436 material" has an average potential of "-0.08V". The ferritic stainless steel material including the "SUS439 AL material" has an average potential of "-0.70V" because the aluminum plated layer 7 is formed on its surface. The ferritic stainless steel material including the "SUS409 material" has an average potential of -0.10V".

Therefore, according to the configuration, in Embodiment 7, the aluminum plated layer 7 formed of the ferritic stainless steel material including the "SUS439 AL material" on the one bracket piece 5a side is interposed between the filler tube 1 and the one bracket 5a. A potential difference between the filler tube 1 and the one bracket 5a is generated due to the existence of the aluminum plated layer 7. The potential difference corrosion is preferentially generated in the aluminum plated layer 7 having a potential lower than that of the filler tube 1. As a result, the aluminum plated layer 7 on the one bracket 5a side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

Furthermore, in Embodiment 7, the other bracket piece 5b formed of the "SUS409 material" has an average potential relative to that of the filler tube 1 formed of the stainless steel material including the "SUS436 material" is "0.10V" as shown in Fig. 7. Accordingly, even if the aluminum plated layer 7 is entirely corroded by the progress of the potential difference corrosion, the potential difference corrosion due to the potential difference from that of the filler tube 1 is preferentially generated on the other bracket 5b side before the oxygen concentration cell is formed in the crevice between the filler tube 1 and the bracket 5. As a result, the bracket 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 7 as well, the crevice corrosion at the filler tube 1 and the breather tube 2 can be inhibited even if the prevention solution against generation of rust, such as cation painting, is not performed on the filler tube 1, the breather tube 2 and the bracket 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 8 as shown in Fig. 6 is formed of the "SUS436 material". The one bracket piece 5a of the bracket 5 is formed of the "SUS439 AL material". The other bracket piece 5b is formed of the "SUS439 material". The breather tube 2 is formed of the "SUS436 material".

As a result, the aluminum plated layer 7 is formed between the filler tube 1 and the breather tube 2 and the one bracket piece 5a.

Then, as shown in Fig. 7, the stainless steel material including the "SUS436 material" has an average potential of "-0.08V". On the other hand, the ferritic stainless steel material including the "SUS439 AL material" has an average potential of "-0.70V" because the aluminum plated layer 7 is formed on its surface.

Therefore, according to the configuration, in Embodiment 8, the aluminum plated layer 7 formed of the ferritic stainless steel material including the "SUS439 AL material" on the one bracket piece 5a side is interposed between the filler tube 1 and the one bracket 5a. A potential difference is generated between the filler tube 1 and one bracket 5a due to the existence of the aluminum plated layer 7. Then, the potential difference corrosion is preferentially generated in the aluminum plated layer 7 having a potential lower than that of the filler tube 1. As a result, the aluminum plated layer 7 on the one bracket 5a side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 8 as well, the crevice corrosion at the filler tube 1 and the breather tube 2 can be inhibited even if the prevention solution against generation of rust, such as cation painting, is not performed on the filler tube 1, the breather tube 2 and the bracket 5. Therefore, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 9 as shown in Fig. 6 is formed of the "SUS436 material". On the other hand, the pair of bracket piece 5a and bracket piece 5b are formed of the "SUS439 AL material". The breather tube 2 is formed of the "SUS436 material".

As a result, the aluminum plated layer 7 is formed between the filler tube 1, the breather tube 2 and the two bracket pieces 5a, 5b.

Then, as shown in Fig. 7, the stainless steel material including the "SUS436 material" has an average potential of "-0.08V". The ferritic stainless steel material including the "SUS439 AL material" has an average potential of "-0.70V" because the aluminum plated layer 7 is formed on its surface.

Therefore, according to the configuration, in Embodiment 9, the aluminum plated layer 7 formed of the ferritic stainless steel material including the "SUS439 AL material" on the pair of bracket pieces 5a and 5b side is interposed between the filler tube 1 and the two brackets 5a, 5b. A potential difference between the filler tube 1 and the pair of brackets 5a, 5b is generated is generated due to the existence of the aluminum plated layer 7. Then, the potential difference corrosion is preferentially generated in the aluminum plated layer 7 having a potential lower than that of the filler tube 1. As a result, the aluminum plated layer 7 on the two brackets 5a, 5b side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 9 as well, the crevice corrosion at the filler tube 1 and the breather tube 2 can be inhibited even if the prevention solution against generation of rust, such as cation painting, is not performed on the filler tube 1, the breather tube 2 and the bracket 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 10 as shown in Fig. 6 is formed of the "SUS439 material". The one bracket piece 5a of the bracket 5 is formed of the "SUS409 AL material". The other bracket piece 5b is formed of the "SUS409 AL material". The breather tube 2 is formed of the "SUS439 material".

As a result, the aluminum plated layer 7 is formed between the filler tube 1 and the breather tube 2 and the one bracket piece 5a.

Then, as shown in Fig. 7, the stainless steel material including the "SUS439 material" has an average potential of "-0.08V". On the other hand, the ferritic stainless steel material including the "SUS409 AL material" has an average potential of "-0.70V" because the aluminum plated layer 7 is formed on its surface. Also, the ferritic stainless steel material including the "SUS409 material" has an average potential of "-0.10V".

Therefore, according to the configuration, in Embodiment 10, the aluminum plated layer 7 formed of the ferritic stainless steel material including "SUS409 AL material" on the one bracket piece 5a side is interposed between the filler tube 1 and the one bracket 5a. A potential difference between the filler tube 1 and the one bracket 5a is generated due to the existence of the aluminum plated layer 7. Then, the potential difference corrosion is preferentially generated in the aluminum plated layer 7 having a potential lower than that of the filler tube 1. As a result, the aluminum plated layer 7 on the one bracket 5a side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

Furthermore, in Embodiment 10, the base material of the one bracket 5a and the SUS409 material forming the other bracket 5b have a potential lower than a potential of the SUS439 material forming the filler tube 1. Therefore, even if the aluminum plated layer 7 is entirely corroded by the progress of the potential difference corrosion, the potential difference corrosion due to the potential difference from that of the filler tube 1 is preferentially generated on the pair of brackets 5a and 5b side before the oxygen concentration cell is formed in the crevice between the filler tube 1 and the bracket 5. As a result, the bracket 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 10 as well, the crevice corrosion at the filler tube 1 and the breather tube 2 can be inhibited even if the prevention solution against generation of rust, such as cation painting, is not performed on the filler tube 1 , the breather tube 2 and the bracket 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

Also, the filler tube 1 in Embodiment 11 as shown in Fig. 6 is formed of the "SUS439 material". On the other hand, the pair of bracket piece 5a and bracket piece 5b are formed of the "SUS409 AL material". The breather tube 2 is formed of the "SUS439 material".

As a result, the aluminum plated layer 7 is formed between the filler tube 1, the breather tube 2 and the two bracket pieces 5a, 5b.

Then, as shown in Fig. 7, the stainless steel material including the "SUS439 material" has an average potential of "-0.08V". The ferritic stainless steel material including the "SUS409 AL material" has an average potential of "-0.70V" because the aluminum plated layer 7 is formed on its surface.

Therefore, according to the configuration, in Embodiment 11, the aluminum plated layer 7 formed of the ferritic stainless steel material including "SUS409 AL material" on the pair of bracket pieces 5a and 5b side is interposed between the filler tube 1 and the two brackets 5a, 5b. The potential difference between the filler tube 1 and the pair of brackets 5a, 5b is generated due to the existence of the aluminum plated layer 7. Then, the potential difference corrosion is preferentially generated in the aluminum plated layer 7 having a potential lower than that of the filler tube 1. As a result, the aluminum plated layer 7 on the two brackets 5a, 5b side exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 can be surely prevented and the airtightness of the fuel tank can be surely maintained.

Furthermore, in Embodiment 11, the SUS409 material forming the base materials of the one bracket 5a and the other bracket 5b have a potential lower than the potential of the SUS439 material forming the filler tube 1. Therefore, even if the aluminum plated layer 7 is entirely corroded by the progress of the potential difference corrosion, the potential difference corrosion due to the potential difference from that of the filler tube 1 is preferentially generated on the pair of brackets 5a and 5b side before the oxygen concentration cell is formed in the crevice between the filler tube 1 and the bracket 5. As a result, the bracket 5 exhibits the sacrificial corrosion prevention effect, thereby inhibiting the generation of rust on the filler tube 1 side. Similarly, the generation of rust on the breather tube 2 can be inhibited. Consequently, the pitting corrosion at the filler tube 1 and the breather tube 2 can be surely prevented and the airtightness of the fuel tank can be surely maintained.

In addition, in Embodiment 11 as well, the crevice corrosion at the filler tube 1 and the breather tube 2 can be inhibited even if the prevention solution against generation of rust, such as cation painting, is not performed on the filler tube 1, the breather tube 2 and the bracket 5. Accordingly, the reduction of manufacturing man-hours for automobiles can be realized. Also, because the filler tube 1, the breather tube 2 and the brackets 3, 4 and 5 are formed of the ferritic stainless steel materials, the filler tube 1, the breather tube 2 and the brackets 3, 4 and 5 can contribute to the weight reduction and the reduction of material cost of automobiles.

To ascertain the prevention function of pitting corrosion of the filler tube 1 and the breather tube 2 in Embodiments 1 to 11 according to the present invention described above, the inventors of the present application performed the CCT cycle test. The CCT cycle test is based on the assumption that an automobile is exposed to an atmospheric corrosion environment such as rainwater or saltwater in areas in various use environments. To measure a corrosion degree of a steel material to which repeated drying and wetting have been applied, the areas were assumed to include a so-called general area in which salt damage caused by sea water and the like is relatively less, to a so-called heavy salt-damaged area as an environment area in which the salt damage caused by sea water and the like is extremely heavy. Such a CCT cycle test was performed to perform an experiment on the potential difference corrosion prevention effect.

The CCT cycle test was performed on a steel material by repeating saltwater spraying, drying, wetting and outside air introducing, as one cycle, for a predetermined number of times. As a result, a residual ratio of plate thickness (%) relative to an initial plate thickness of the filler tube 1 and the breather tube 2, as an obtained corrosion acceleration degree, was measured.

Then, the inventors of the present application selected the "SUS439 material", as a test material, from the "SUS436 material" and the "SUS439 material" forming the filler tube 1 and the breather tube 2 because the two materials have potential differences equal to each other, and also selected the "SUS409 material" or the "SUS409 AL material" as the material forming the brackets 3, 4 and 5 for the above-described CCT cycle test.

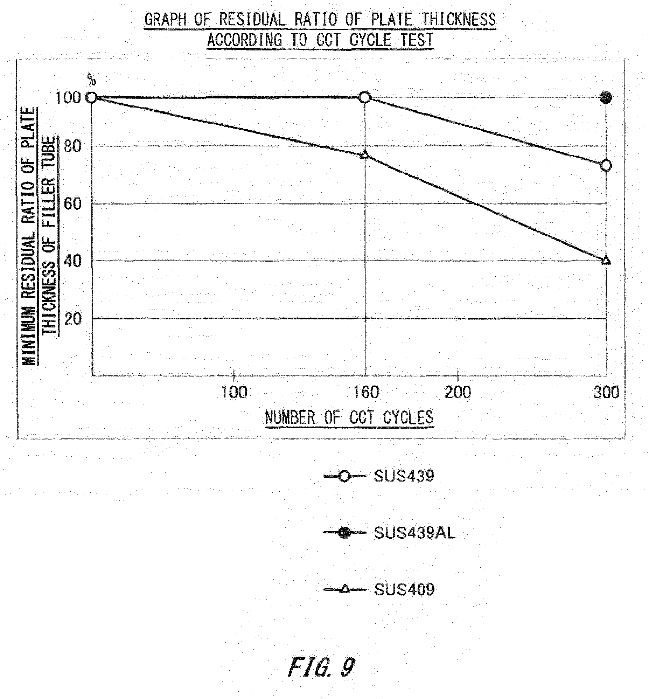

According to the CCT cycle test performed under such a condition, a test result as shown in Fig. 9 was obtained. In Fig. 9, the horizontal axis indicates a number of cycles that is set based on the assumption that the areas include "the so-called general area in which the salt damage caused by sea water and the like is relatively less" to "the so-called salt-damaged area as an environment area in which the salt damage caused by sea water and the like is extremely heavy". The virtual axis indicates the residual ratio of plate thickness as the corrosion degree of the filler tube 1 relative to that of each material respectively forming the filler tube 1, the breather tube 2 and the brackets 3, 4 and 5.

According to Fig. 9, in a case in which the "SUS409 material" was used to form the filler tube 1, the breather tube 2 and the brackets 3, 4 and 5, while the residual ratio of plate thickness of the filler tube 1 and the breather tube 2 is 80% when the number of cycles is 160 that is an intermediate number of cycles, the residual ratio of plate thickness of the filler tube 1 and the breather tube 2 is 40% when the number of cycles reached 300 that is a number of cycles corresponding to that in the so-called salt-damaged area, but the pitting corrosion is not generated yet.

On the other hand, for example, in a case in which the "SUS439 material" was used to form the filler tube 1 and the breather tube 2 and the "SUS409 material" was used to form the brackets 3, 4 and 5, while the residual ratio of plate thickness of the filler tube 1 and the breather tube 2 is 100% when the number of cycles is 160 that is the intermediate number of cycles, the residual ratio of plate thickness of the filler tube 1 and the breather tube 2 shows a value of 80% even if the number of cycles reached 300 that is a number of cycles corresponding to the so-called salt-damaged area.

This shows that as long as at least a slight potential difference exists between the filler tube 1 and the breather tube 2 and the brackets 3, 4 and 5, the pitting corrosion on the filler tube 1 and breather tube 2 can be prevented from generating according to the sacrificial corrosion prevention effect on the brackets 3, 4 and 5.

Also, as the above-described Embodiment 1, in a case in which the filler tube 1 and the breather tube 2 are formed of the "SUS436 material" and the brackets 3, 4 and 5 are formed of the "SUS409 AL material", the residual ratio of plate thickness of the filler tube 1 and the breather tube 2 shows 100%, which is a high value, for every number of cycles.

This is due to a large potential difference generated by the aluminum plated layer 7 being interposed between the filler tube 1 and the breather tube 2 and the brackets 3, 4 and 5. It shows that according to such a potential difference, the aluminum plated layer 7 on the brackets 3, 4 and 5 exhibits the sacrificial corrosion prevention effect and can prevent the pitting corrosion on the filler tube 1 and breather tube 2.

Also, even if the aluminum plated layer 7 of the brackets 3, 4 and 5 formed of the "SUS409 AL material" is entirely corroded, the brackets 3, 4 and 5 are equivalent to the "SUS409 material". Therefore, the potential is lower than that of the filler tube 1 and the breather tube 2 formed of the "SUS436 material" although the difference may be slight; accordingly, the sacrificial corrosion prevention effect is exhibited and the pitting corrosion prevention function on the filler tube 1 and breather tube 2 can be achieved.

According to the test result described above, for example, as Embodiment 1, in the case in which the filler tube 1 and the breather tube 2 are formed of the "SUS436 material" and the brackets 3, 4 and 5 are formed of the "SUS409 AL material", the aluminum plated layer 7 exhibits the sacrificial corrosion prevention effect because of its potential lower than that of the filler tube 1 and the breather tube 2, and the pitting corrosion prevention function on the filler tube 1 and breather tube 2 can be achieved. Also, even if the aluminum plated layer 7 is entirely corroded, because the base material of the brackets 3, 4 and 5 are equivalent to that being formed of the "SUS409 material", the brackets 3, 4 and 5 have a potential lower than that of the filler tube 1 and the breather tube 2. Therefore, it is considered that the brackets 3, 4 and 5 further exhibits the sacrificial corrosion prevention effect and the pitting corrosion prevention function on the filler tube 1 and breather tube 2 can be achieved.

Similarly, in a case in which the filler tube 1 and the breather tube 2 are formed of the "SUS436 material" and the brackets 3, 4 and 5 are formed of the "SUS439 AL material" as Embodiment 2, or in a case in which the filler tube 1 and the breather tube 2 are formed of the "SUS439 material" and the brackets 3, 4 and 5 are formed of the "SUS409 AL material" as Embodiment 3, a large potential difference exists due to the aluminum plated layer 7 being interposed between the filler tube 1 and the breather tube 2 and the brackets 3, 4 and 5. Accordingly, according to the sacrificial corrosion prevention effect by the aluminum plated layer 7 on the brackets 3, 4 and 5, the pitting corrosion on the filler tube 1 can be prevented. Similarly, the pitting corrosion on the breather tube 2 can be prevented.

Then, clearly as described above, it can be said that each ferritic stainless steel material forming the filler tube and the breather tube 2 shown in Fig. 6 in the other Embodiment 4 to Embodiment 11 described above can exhibit the inhibition effect of crevice corrosion or pitting corrosion between the brackets 3, 4 and 5, similar to Embodiment 1 to Embodiment 3.

### INDUSTRIAL APPLICABILITY

The present invention described above can inhibit the crevice corrosion and surely prevent the generation of pitting corrosion even if ferritic stainless steel material which is advantageous in terms of material cost is used for a tubular member to be connected to a fuel tank, and a bracket. Also, the present invention can contribute to the weight and cost reductions of automobiles. Therefore, it can be said that the present invention is suitable for a structure for installing the tubular member on a vehicle, and the like.

### [EXPLANATION OF REFERENCES]

1 ... filler tube; 2 ... breather tube; 3, 4, 5 ... bracket; 5a ... one bracket piece; 5b ... the other bracket piece; 7 ... aluminum plated layer

## Claims

1. An installing structure for installing on a vehicle a tubular member to be connected to a fuel tank, comprising:
a bracket to be provided on a circumferential surface of the tubular member, wherein
the tubular member is formed of a ferritic stainless steel material and is installed on the vehicle via the bracket,
the bracket is formed of a ferritic stainless steel material having a surface on which an aluminum plated layer is formed,
the aluminum plated layer has a potential lower than a potential of the ferritic stainless steel material of the tubular member and a potential of the ferritic stainless steel material of the bracket, and
the ferritic stainless steel material of the bracket has a potential lower than a potential of the ferritic steel material of the tubular member.

2. The installing structure according to Claim 1, wherein
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass% and N of ≤ 0.015 mass%, and that has a balance including incidental impurities and Fe, and
the ferritic stainless steel material of the bracket is a ferritic stainless steel material that contains C of ≤ 0.030 mass%, Si of ≤ 1.00 mass%, Mn of ≤1.00 mass%, P of ≤ 0.040 mass%, S of ≤0.030 mass%, Cr of 10.50 to 11.75 mass%, Ti of 10(C+N) to 0.75 mass% and N of ≤ 0.015 mass%, that has a balance including incidental impurities and Fe, and that has a surface on which the aluminum plated layer is formed.

3. An installing structure for installing on a vehicle a tubular member to be connected to a fuel tank, comprising:
a bracket to be provided on a circumferential surface of the tubular member, wherein
the tubular member is formed of a ferritic stainless steel material and is installed on the vehicle via the bracket,
the bracket is formed of a ferritic stainless steel material having a surface on which an aluminum plated layer is formed,
the aluminum plated layer has a potential lower than a potential of the ferritic stainless steel material of the tubular member and a potential of the ferritic stainless steel material of the bracket,
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass% and N of ≤ 0.015 mass%, and that has a balance including incidental impurities and Fe, and
the ferritic stainless steel material of the bracket is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass% and N of ≤ 0.015 mass%, that has a balance including incidental impurities and Fe, and that has a surface on which the aluminum plated layer is formed.

4. The installing structure according to Claim 1, wherein
the ferritic stainless steel material of the tubular member is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass% and N of ≤ 0.015 mass%, and that has a balance including incidental impurities and Fe, and
the ferritic stainless steel material of the bracket is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, that has a balance including incidental impurities and Fe, and that has a surface on which the aluminum plated layer is formed.

5. The installing structure according to any one of Claims 1 to 4, wherein
the bracket is welded to the tubular member.

6. The installing structure according to Claim 1, wherein
the bracket is constituted of a pair of bracket pieces that sandwich and hold the tubular member therebetween,
one bracket piece of the pair of bracket pieces is supported by the vehicle so that the tubular member is mounted on the vehicle,
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass% and N of ≤ 0.015 mass%, and that has a balance including incidental impurities and Fe,
a ferritic stainless steel material of one bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass % and N of ≤ 0.015 mass%, that has a balance including incidental impurities and Fe, and that has a surface on which the aluminum plated layer is formed, and
a ferritic stainless steel material of the other bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass % and N of ≤ 0.015 mass%, and that has a balance including incidental impurities and Fe, or a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, that has a balance including incidental impurities and Fe, and that has a surface on which the aluminum plated layer is formed.

7. The installing structure according to Claim 1, wherein
the bracket is constituted of a pair of bracket pieces that sandwich and hold the tubular member therebetween,
one bracket piece of the pair of bracket pieces is supported by the vehicle so that the tubular member is mounted on the vehicle, and
a ferritic stainless steel material of one bracket piece of the pair of bracket pieces has a potential lower than a potential of the ferritic stainless steel material of the other bracket piece.

8. The installing structure according to Claim 1, wherein
the bracket is constituted of a pair of bracket pieces that sandwich and hold the tubular member therebetween,
one bracket piece of the pair of bracket pieces is supported by the vehicle so that the tubular member is mounted on the vehicle,
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass % and N of ≤ 0.015 mass%, and that has a balance including incidental impurities and Fe,
a ferritic stainless steel material of one bracket piece of the pair of bracket pieces is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass % and N of ≤ 0.015 mass%, and that has a balance including incidental impurities and Fe, and
a ferritic stainless steel material of the other bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, that has a balance including incidental impurities and Fe, and that has a surface on which the aluminum plated layer is formed.

9. The installing structure according to Claim 1, wherein
the bracket is constituted of a pair of bracket pieces that sandwich and hold the tubular member therebetween,
one bracket piece of the pair of bracket pieces is supported by the vehicle so that the tubular member is mounted on the vehicle,
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass % and N of ≤ 0.015 mass%, and that has a balance including incidental impurities and Fe,
a ferritic stainless steel material of one bracket piece of the pair of bracket pieces is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass % and N of ≤ 0.015 mass%, that has a balance including incidental impurities and Fe, and that has a surface on which the aluminum plated layer is formed, and
a ferritic stainless steel material of the other bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, and that has a balance including incidental impurities and Fe.

10. The installing structure according to Claim 1, the installing structure for installing on a vehicle a tubular member to be connected to a fuel tank and comprising a bracket to be provided on a circumferential surface of the tubular member, wherein
the tubular member is formed of a ferritic stainless steel material and is installed on the vehicle via the bracket,
the bracket is formed of a ferritic stainless steel material having a surface on which an aluminum plated layer is formed,
the aluminum plated layer has a potential lower than a potential of the ferritic stainless steel material of the tubular member and a potential of the ferritic stainless steel material of the bracket,
the bracket is constituted of a pair of bracket pieces that sandwich and hold the tubular member therebetween,
one bracket piece of the pair of bracket pieces is supported by the vehicle so that the tubular member is mounted on the vehicle,
the ferritic stainless steel material of the tubular member is a ferritic stainless steel material that contains C of ≤ 0.010 mass%, Si of ≤ 0.14 mass%, Mn of ≤ 0.20 mass%, P of ≤ 0.040 mass%, S of ≤ 0.006 mass%, Cr of 17.00 to 18.00 mass%, Mo of 1.00 to 1.50 mass%, Ti of 10(C+N) to 0.35 mass % and N of ≤ 0.015 mass% and that has a balance including incidental impurities and Fe,
a ferritic stainless steel material of one bracket piece of the pair of bracket pieces is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass % and N of ≤ 0.015 mass%, that has a balance including incidental impurities and Fe, and that has a surface on which the aluminum plated layer is formed, and
a ferritic stainless steel material of the other bracket piece of the pair of bracket pieces is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass % and N of ≤ 0.015 mass%, and that has a balance including incidental impurities and Fe, or a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass% and N of ≤ 0.015 mass%, that has a balance including incidental impurities and Fe, and that has a surface on which the aluminum plated layer is formed.

11. The installing structure according to Claim 1, wherein
the bracket is constituted of a pair of bracket pieces that sandwich and hold the tubular member therebetween,
one bracket piece of the pair of bracket pieces is supported by the vehicle so that the tubular member is mounted on the vehicle,
the ferritic stainless steel material of the tubular member is a ferritic stainless steel material that contains C of ≤ 0.010 mass%, Si of ≤ 1.00 mass%, Mn of ≤ 0.20 mass%, P of ≤ 0.040 mass%, S of ≤ 0.006 mass%, Cr of 17.00 to 18.00 mass%, Ti of 10(C+N) to 0.35 mass% and N of ≤ 0.015 mass%, and that has a balance including incidental impurities and Fe,
a ferritic stainless steel material of one bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, that has a balance including incidental impurities and Fe, and that has a surface on which the aluminum plated layer is formed, and
a ferritic stainless steel material of the other bracket piece of the pair of bracket pieces is a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass%, and that has a balance including incidental impurities and Fe, or a ferritic stainless steel material that contains C of ≤ 0.030 mass%, Si of ≤ 1.00 mass%, Mn of ≤ 1.00 mass%, P of ≤ 0.040 mass%, S of ≤ 0.030 mass%, Cr of 10.50 to 11.75 mass%, Ti of 10(C+N) to 0.75 mass% and N of ≤ 0.015 mass% , that has a balance including incidental impurities and Fe, and has a surface on which the aluminum plated layer is formed.

12. The installing structure according to any one of Claims 6 to 11, further comprising
a bolt for fixing the bracket pieces to each other with the tubular member sandwiched therebetween.

13. The installing structure according to Claim 12, wherein
the bolt has a lower potential than the tubular member that is sandwiched between the bracket pieces.

14. The installing structure according to any one of Claims 1 to 13, further comprising
another bolt for fixing the bracket to the vehicle, wherein
the other bolt has a lower potential than the tubular member.

15. The installing structure according to any one of Claims 1 to 14, wherein
the tubular member includes at least one of a filler tube configured to lead fuel from a fuel inlet to the fuel tank and a breather tube configured to discharge gas out of the fuel tank.

16. A piping structure comprising
the installing structure according to any one of Claims 1 to 15; and
the tubular member.
